# FASCICULE DE BREVET EUROPEEN

(11) **EP 2 520 940 B1**
(45) Date de publication et mention de la délivrance du brevet: **17.06.2020**
(21) Numéro de dépôt: 12165790.2
(22) Date de dépôt: 26.04.2012
(51) Int. Cl.: G01P 15/08, G01P 15/18, G01C 19/5712, G01C 19/5747

(54) **Centrale inertielle à plusieurs axes de détection**
Trägheitseinheit mit mehreren Erkennungsachsen
Inertial unit with a plurality of detection axes

(30) Priorité: 02.05.2011 FR 1153731
(43) Date de publication de la demande: 07.11.2012
(73) Titulaire: Commissariat à l'Énergie Atomique et aux Énergies Alternatives, 75015 Paris (FR)
(72) Inventeur: Walther, Arnaud, 38000 Grenoble (FR)
(74) Mandataire: Ilgart, Jean-Christophe

(56) Documents cités:
- WO-A1-2006/034706
- WO-A1-2009/062786
- US-A- 5 869 760
- US-A1- 2010 132 463
- WATANABE Y ET AL: "Five-axis motion sensor with electrostatic drive and capacitive detection fabricated by silicon bulk micromachining", SENSORS AND ACTUATORS A, ELSEVIER SEQUOIA S.A., LAUSANNE, CH, vol. 97-98, 1 avril 2002 (2002-04-01), pages 109-115, XP004361590, ISSN: 0924-4247, DOI: 10.1016/S0924-4247(01)00797-X

## Description

### DOMAINE TECHNIQUE ET ART ANTÉRIEUR

La présente invention se rapporte à une centrale inertielle MEMS ou NEMS à plusieurs axes destinée à détecter des vitesses angulaires et/ou des accélérations selon plusieurs axes.

Il existe des centrales inertielles à cinq axes de détection, trois axes en accélération et deux axes en rotation. Une telle centrale est décrite dans le document Y. Watanabe et al, "Five axis motion sensor with electrostatic drive and capacitive detection fabricated with silicon bulk micromachining", Sensors and Actuators A, Vol 97-98, p 109-115, 2002*.* D'une part cette centrale est réalisée en technologie de volume, ce qui rend sa fabrication longue et coûteuse. D'autre part, la détection de tous les axes de détection et de l'excitation sont intriqués. Le traitement des données est alors complexe et un risque d'introduction d'erreurs important existe, celui-ci étant d'autant plus important que la détection capacitive par variation d'entrefer est non-linéaire, cette non-linéarité étant amplifiée lorsque les mouvements sont de forte amplitude, ce qui est le cas des mouvements d'excitation. En outre, la précision de mesure est d'autant plus importante que l'entrefer capacitif est faible, or l'actionnement requiert des entrefers importants pour obtenir des amplitudes significatives.

Le document US2010/132463 décrit une centrale inertielle formée de trois gyromètres intégrés, comportant trois paires de masses inertielles et un disque oscillant qui permet d'avoir deux directions de mouvement d'excitation dans le plan. Cette centrale présente l'avantage par rapport à une centrale comportant trois gyromètres distincts d'avoir une électronique plus simple, en particulier elle ne requiert qu'une seule boucle d'asservissement en excitation. Deux paires de masses sont dédiées à la détection des forces de Coriolis autour des axes contenus dans le plan de la centrale et une paire de masses est dédiée à la détection de la force de Coriolis autour de l'axe normal au plan. Cependant ces paires de masses sont également sensibles aux accélérations, ce qui perturbe la mesure de la force de Coriolis. En outre, cette centrale ne permet pas de mesure d'accélération.

### EXPOSÉ DE L'INVENTION

C'est par conséquent un but de la présente invention d'offrir une centrale inertielle capable de détecter des grandeurs selon au moins quatre axes, une de ces grandeurs étant une accélération et les autres grandeurs étant choisies parmi les accélérations et les rotations.

Le but précédemment énoncé est atteint par une centrale inertielle comportant au moins quatre capteurs inertiels, deux capteurs étant alignés sur un premier axe et deux capteurs étant alignés sur un deuxième axe.

Chaque capteur comporte une paire de masses inertielles, les masses de chaque paire étant reliée entre elle par un couplage mécanique et les capteurs entre eux sont couplés mécaniquement. Le couplage mécanique entre les masses de chaque paire est un couplage fort.

Les capteurs peuvent être des gyromètres ou des accéléromètres dynamiques. Du fait de la mise en œuvre de deux masses inertielles dans chaque capteur, ils sont relativement insensibles à la rotation dans le cas d'un accéléromètre et relativement insensibles à l'accélération dans le cas d'un gyromètre. Ainsi le traitement des signaux de détection est simplifié, il n'est pas nécessaire de séparer les signaux pour obtenir les valeurs d'accélération et/ou de vitesse de rotation. En outre, en couplant mécaniquement les capteurs entre eux, une seule boucle d'asservissement en excitation est requise. L'électronique de commande de la centrale est donc simplifiée et la précision des mesures faite est bonne.

En d'autres termes, on réalise une centrale inertielle avec au moins quatre capteurs inertiels couplés mécaniquement de sorte à transmettre l'excitation aux quatre capteurs; les capteurs peuvent être des accéléromètres choisis de sorte à être peu sensibles aux forces de Coriolis et/ou des gyromètres ceux-ci étant choisis de sorte à être peu sensibles aux accélérations.

Grâce à l'invention, on peut réaliser une centrale inertielle à six axes de détection capable de mesurer les accélérations dans les trois axes de l'espace et les forces de Coriolis autour des trois axes de l'espace de manière quasi indépendante, avec une surface réduite par rapport à une structure avec six capteurs indépendants.

De manière avantageuse, les moyens de couplage sont réalisés de sorte à présenter un centre de symétrie et les capteurs sont choisis de sorte à avoir une structure et un fonctionnement proches. En outre, leur disposition relative est choisie de préférence à offrir une centrale inertielle sensiblement symétrique.

La présente invention a alors pour objet une centrale inertielle selon la revendication 1.

Les moyens de couplage intracapteurs et les moyens de couplage intercapteurs sont distincts.

Le terme "intercapteur" correspond au terme "inter-sensor" en terminologie anglo-saxonne et le terme "intracapteur" correspond au terme "intra-sensor" en terminologie anglo-saxonne.

Les moyens d'excitation peuvent être communs pour l'ensemble des capteurs ou indépendants d'un capteur à l'autre.

Lesdits moyens de couplage intracapteurs sont des moyens de couplage fort.

Lesdits moyens de couplage intercapteurs peuvent être sont situés à l'intersection des axes portant les deux paires de capteurs, les deux capteurs de chaque paire étant disposés de part et d'autre desdits moyens de couplage intercapteurs.

De préférence, les deux axes sont perpendiculaires.

Avantageusement, les moyens de couplage intercapteurs sont des moyens de couplage fort.

Les moyens de couplage intercapteurs sont par exemple reliés à la partie d'excitation de l'une des masses de chaque capteur.

Les moyens de couplage intercapteurs peuvent comporter un assemblage de poutres comportant au moins un motif fermé.

Dans un exemple de réalisation, le motif fermé a la forme d'un losange, chaque sommet dudit losange étant relié à une masse d'un capteur.

Les moyens de couplage intracapteurs relient par exemple les deux parties d'excitation de chaque capteur.

De préférence, la partie d'excitation de chaque capteur est excitable dans une seule direction.

La centrale inertielle peut comporter un ou plusieurs gyromètres et un accéléromètre ou plusieurs accéléromètres, ledit au moins gyromètre et/ou accéléromètre étant apte à mesurer une rotation et/ou une accélération selon un axe dit de détection.

La centrale inertielle peut comporter une barre rigide en rotation autour d'un axe orthogonal à l'axe de détection, ladite barre rigide reliant les deux parties de détection des masses de l'accéléromètre.

De préférence, les moyens de couplage intracapteurs entre deux masses d'un gyromètre réalisent un couplage fort en antiphase, et les moyens de couplage intracapteurs entre deux masses d'un accéléromètre réalisent un couplage fort en phase.

Dans un exemple de réalisation, les moyens de couplage intracapteurs en antiphase comportent un assemblage fermé de poutres.

Par exemple, les moyens de couplage intracapteurs en phase comportent une liaison rigide, les deux masses d'un même accéléromètre agissant comme une masse unique.

Dans un exemple de réalisation, le ou les gyromètres comporte(nt) une barre rigide en rotation autour de l'axe de détection autour duquel la rotation est à détecter reliant les parties de détection des masses inertielles.

Au moins l'un des capteurs peut être remplacé par un objet ne fournissant pas de mesure sur l'accélération ou la rotation et assurant un équilibrage de la centrale inertielle.

La centrale inertielle selon la présente invention peut comporter trois paires de capteurs, les capteurs de chaque paire étant alignés sur un axe, deux des axes étant parallèles et l'autre axe étant sécant aux deux axes parallèles, des premiers moyens de couplage intercapteurs étant prévus au niveau de chaque intersection d'un des axes parallèles avec l'autre axe et des deuxième moyens de couplage intercapteurs étant prévus entre les premiers moyens de couplage intercapteurs.

Dans un exemple de réalisation, la centrale inertielle comporte trois gyromètres et trois accéléromètres, les trois gyromètres étant reliés directement à des premiers moyens de couplage intercapteurs différents des premiers moyens de couplage intercapteurs auxquelles sont reliés directement les trois accéléromètres.

Dans un autre exemple de réalisation, la centrale inertielle comporte huit capteurs, les moyens de couplage intercapteurs comportant un assemblage de huit motifs en forme de losange juxtaposés, les motifs étant reliés par l'un de leurs sommets en un point constituant un centre de symétrie de la structure de couplage, de façon à présenter des motifs opposés et alignés deux à deux, les sommets des motifs opposés au centre de symétrie étant destinés à être solidaire chacun d'une masse des huit capteurs.

Les moyens d'excitation sont par exemple de type électrostatique, piézoélectrique ou magnétique et les moyens de détection sont de type capacitif, piézoélectrique, magnétique ou piézorésistif.

De manière référentielle, les moyens de détections sont choisis de même type pour tous les capteurs.

L'unité de contrôle peut avantageusement comporter une boucle d'asservissement en excitation unique pour tous capteurs et des moyens de détection du déplacement des parties de détection.

L'unité de contrôle peut comporter des moyens de lecture des moyens de détection des différents capteurs par multiplexage temporel.

### BRÈVE DESCRIPTION DES DESSINS

La présente invention sera mieux comprise à l'aide de la description qui va suivre et des dessins en annexes sur lesquels :
- la figure 1 est une vue de dessus d'un exemple de réalisation d'une centrale inertielle selon la présente invention à 4 axes,
- les figures 2A et 2B sont des vues de détail de la figure 1,
- la figure 3 est une autre vue de détail de la figure 1,
- la figure 4 est une vue de dessus d'un capteur inertiel pouvant former un gyromètre et pouvant être mis en œuvre dans la centrale de la figure 1,
- la figure 5 est une vue de dessus d'un capteur inertiel pouvant former un accéléromètre et pouvant être mis en œuvre dans la centrale de la figure 1,
- la figure 6 est une représentation graphique de la simulation du déplacement en excitation des masses de la centrale inertielle de la figure 1 dans un mode de résonance en excitation, la structure comportant quatre gyromètres couplés avec un couplage faible,
- la figure 7A est une vue de détail d'une centrale inertielle selon une variante de la figure 1 dans laquelle les capteurs sont couplés avec un couplage fort,
- la figure 7B une représentation graphique de la simulation du déplacement en excitation des masses de la centrale inertielle de la figure 7A dans un mode de résonance en excitation, la structure comportant quatre gyromètres,
- la figure 7C est une représentation graphique de la simulation du déplacement en excitation des masses de la centrale inertielle de la figure 7A dans un mode de résonance en excitation, la structure comportant trois gyromètres et un accéléromètre,
- la figure 7D est une représentation graphique de la simulation du déplacement en excitation des masses d'une variante de la centrale inertielle de la figure 7A dans un mode de résonance en excitation, la structure comportant trois gyromètres et un accéléromètre couplés avec un couplage faible,
- la figure 8A est une vue de dessus d'un exemple de réalisation d'une centrale inertielle à six axes,
- la figure 8B est une représentation graphique de la simulation du déplacement en excitation des masses de la centrale inertielle de la figure 8A dans un mode de résonance en excitation,
- les figures 9A et 9B sont des vues de dessus de variantes de réalisation des moyens de couplage inter-capteurs,
- la figure 10 est une vue de dessus d'un exemple de réalisation d'une centrale inertielle à 8 axes,
- les figures 11A à 11D sont des représentations schématiques de différentes étapes d'un exemple de procédé de réalisation d'une centrale inertielle selon la présente invention.

### EXPOSÉ DÉTAILLÉ DE MODES DE RÉALISATION PARTICULIERS

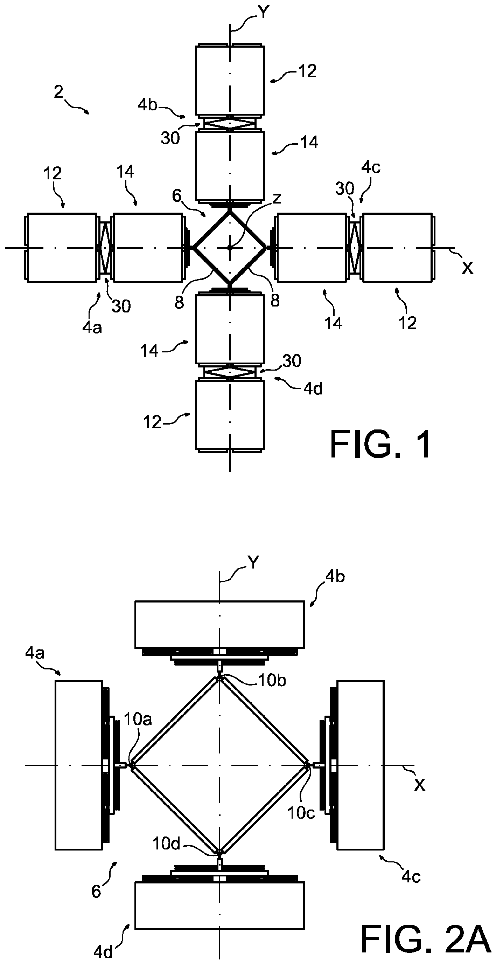

Sur les figures 1, 2A, 2B et 3, on peut voir un exemple de réalisation d'une centrale inertielle 2 selon la présente invention à quatre axes. On définit les axes X, Y et Z comme suit:
- les axes X et Y définissent le plan de la centrale inertielle, dans les représentations ceux-ci sont contenus dans le plan de la feuille, et
- l'axe Z est perpendiculaire au plan de la centrale, et au plan de la feuille dans les représentations.

La centrale inertielle 2 comporte quatre capteurs 4a, 4b, 4c et 4d répartis deux à deux sur les deux axes X et Y perpendiculaires.

Une centrale dans laquelle les capteurs sont répartis sur des axes sécants mais non perpendiculaires ne sort pas du cadre de la présente invention.

Les capteurs 4a à 4d peuvent être des gyromètres ou des accéléromètres.

La centrale 2 comporte des moyens 6 de couplage mécanique entre les quatre capteurs 4a à 4d de sorte à lier en mouvement les masses de tous les capteurs.

Dans l'exemple représenté, les moyens de couplage mécanique 6 sont formés par une structure de quatre poutres 8 formant un losange dont chaque sommet 10a à 10d est relié à un capteur 4a à 4d. Chacune des diagonales du losange est alignée avec un des axes X et Y de la centrale inertielle.

En variante, les moyens de couplage pourraient former un carré ou une ellipse, dans ce dernier cas le grand axe serait aligné sur l'axe X ou Y, et le petit axe serait aligné sur l'axe Y ou X.

Ainsi un mouvement vibratoire généré par un signal d'excitation à l'un des sommets ou à deux sommets opposés d'un des axes X, Y est transmis aux deux autres sommets situés sur l'autre axe Y, X.

Dans la suite de la description nous utiliserons les expressions « couplage fort » et « couplage faible » pour qualifier les couplages mécaniques entre les capteurs, et entre les masses d'un même capteur.

Dans la présente demande, on entend par "couplage fort" entre deux masses mobiles une liaison mécanique telle que si on déplace une première masse d'une amplitude A0, induisant un déplacement de la deuxième masse d'une amplitude A1, puis qu'on déplace la deuxième masse d'une amplitude A1 induisant un mouvement d'une amplitude A2 sur la première masse, les amplitudes A0 et A2 sont sensiblement les mêmes.

On entend par "couplage faible" entre deux masses mobiles une liaison mécanique telle que A2 est inférieure à A0.

Nous allons maintenant décrire des exemples de capteurs 4a à 4d pouvant être mis en œuvre dans la centrale inertielle.

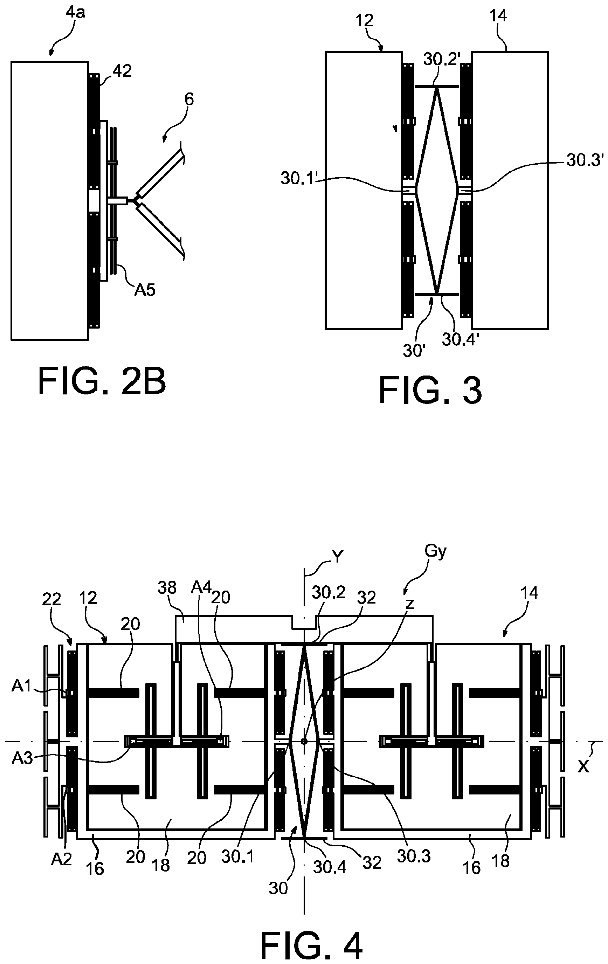

Sur la figure 4, on peut voir un exemple de réalisation d'un gyromètre pouvant être mis en œuvre dans la centrale inertielle de la figure 1. Le gyromètre est un gyromètre Z, i.e. il permet de détecter la rotation autour de l'axe Z, par exemple pour cela il est excité le long de l'axe X et la détection se fait le long de l'axe Y ou inversement.

Le gyromètre comporte deux masses inertielles 12, 14 mobiles par rapport à un substrat.

La masse 12 comporte deux parties 16, 18 mobiles l'une par rapport à l'autre. Dans l'exemple représenté, la première partie 16 est en forme de cadre et entoure sur trois côtés la deuxième partie 18.

Le cadre 16 est suspendu au substrat et la deuxième partie est disposée à l'intérieur du cadre 16 et est suspendue à celui-ci par des poutres 20.

La première partie mobile 16 est ancrée sur le substrat par exemple au niveau des points A1, A2.

Des moyens élastiques de suspension 22 sont prévus entre les points d'ancrage A1, A2 et la première partie 16 lui permettant de vibrer le long de l'axe X.

Le capteur comporte des moyens d'excitation 24 de la première partie mobile. Dans l'exemple représenté, les moyens d'excitation 24 sont prévus latéralement. Ces moyens d'excitation peuvent être du type électrostatique aux moyens de peignes interdigités, piézoélectrique, magnétique...

Avantageusement, la première partie mobile d'excitation 16 présente un seul degré de liberté en déplacement selon l'axe d'excitation, selon l'axe X dans l'exemple représenté. Cette partie mobile 16 est reliée aux moyens de couplage. Celle-ci ne se déplace avantageusement qu'en excitation, ce qui permet de ne coupler que les excitations et de ne pas avoir de couplages en détection qui induiraient des perturbations entre capteurs.

Les moyens de couplage sont fixés à la partie d'excitation.

La deuxième partie mobile 18 est, quant à elle, montée articulée autour d'un pivot 26 d'axe parallèle à l'axe Z orthogonal au plan du capteur. Dans l'exemple représenté, la deuxième partie mobile 18 est reliée au pivot 26, cette liaison sera décrite ultérieurement. De préférence, des points d'ancrage A3, A4 sont prévus dans la partie centrale de la deuxième partie mobile 18 pour assurer le guidage. Des moyens élastiques sont alors prévus entre ces points d'ancrage A3, A4 et la deuxième partie 18.

Des moyens de détection (non représentés) du déplacement de la deuxième partie 18 sont prévus, ils sont par exemple de type capacitif, piézoélectrique, magnétique, piézorésistive. Par exemple on peut prévoir des jauges piézorésistives de part et d'autre du pivot 26 et de mesurer la variation de résistance électrique des jauges et ainsi détecter la variation de longueur et en déduire l'amplitude de déplacement des deuxièmes parties 18. De préférence, les mêmes types de moyens de détection sont prévus pour tous les capteurs afin de simplifier la réalisation et le traitement des signaux de détection.

De manière alternative, la deuxième partie 18 peut, elle-même, être formée de plusieurs sous-parties. Par exemple elle peut comporter un premier cadre relié au à la première partie d'excitation, ce premier cadre bouge en excitation de manière solidaire avec le premier cadre d'excitation et présente un degré de liberté en détection. Un deuxième cadre, ancré ou non selon le mode d'excitation, se voit transmettre tout le mouvement de détection du deuxième cadre ou une partie de celui-ci.

La deuxième masse 14 a sensiblement la même structure que la première et ne sera pas décrite en détail.

En outre le capteur comporte des moyens de couplage fort 30 entre les deux masses 12, 14 le long de l'axe X et reliant les deux premières parties 16. Les moyens de couplage fort 30 sont du type en antiphase, i.e. lorsque les masses sont excitées, celles-ci s'éloignent ou se rapprochent l'une de l'autre en phase. En outre, le couplage étant fort, elles ont la même amplitude de déplacement.

Dans l'exemple représenté, les moyens de couplage fort 30 comportent une structure fermée de poutres en losange, deux sommets 30.1, 30.3 opposés étant reliés aux premières parties 16 de chacune des masses.

Les deux autres sommets 30.2, 30.4 sont reliés à des poutres 32, perpendiculaire à une droite reliant les sommets 30.2 et 30.4 au niveau de la zone centrale des poutres. Les poutres sont ancrées sur le substrat à leur extrémité. Les moyens de couplage 30 se déforment le long de l'axe X et permettent aux masses de s'éloigner et de se rapprocher le long de l'axe X.

De manière avantageuse, les deux deuxièmes parties sont reliées au pivot 26 via une barre 38 rigide en rotation autour d'un axe parallèle à l'axe de détection, ce qui permet de réduire très fortement la sensibilité des gyromètres aux accélérations.

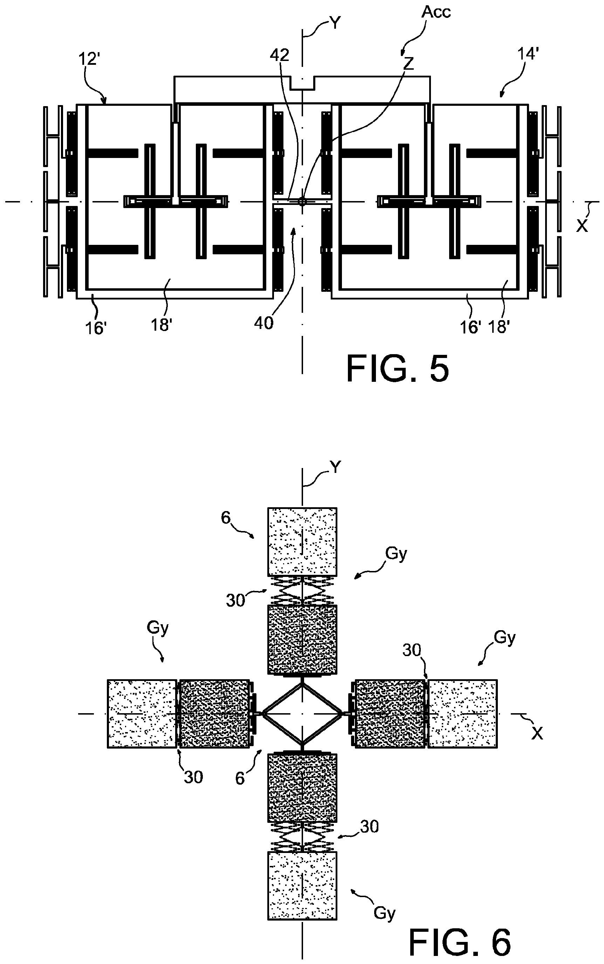

Sur la figure 5, on peut voir un exemple de réalisation d'un accéléromètre Y, ce qui signifie qu'un signal d'excitation est appliqué le long de l'axe X, et le signal de détection est un déplacement en rotation autour de Z.

De préférence, on choisit un accéléromètre dont la structure et le mode de fonctionnement sont proches de ceux des gyromètres. L'accéléromètre est du type dynamique et est excité en détection, de manière similaire à un gyromètre. Ainsi, on peut appliquer la même boucle d'asservissement en excitation à tous les capteurs et utiliser les mêmes moyens de détection.

La structure de l'accéléromètre de la figure 5 est très proche de celle du gyromètre de la figure 4. Il comporte deux masses 12', 14', chacune comprenant au moins une première partie mobile d'excitation 16' et une deuxième partie mobile de détection 18'. Cependant, dans le cas de l'accéléromètre, celui-ci comporte des moyens de couplage 40 fort en phase; i.e. que les masses se déplacent dans le même sens le long de la même direction et avec la même amplitude. De manière particulière l'accéléromètre mis en œuvre dans la centrale inertielle selon la présente invention est du type dynamique, i.e. il comporte des moyens d'excitation alors que, généralement, les accéléromètres ne requièrent pas de tels moyens pour leur fonctionnement.

Dans l'exemple représenté, les moyens de couplage fort en phase sont formés par une liaison rigide, type barre connectée à chacune des premières parties mobiles 16', simplifiant la fabrication du capteur.

Les moyens de couplage 6 entre les capteurs sont, dans l'exemple représenté, des moyens de couplage faible. Ceux-ci sont particulièrement visible sur les figures 2A et 2B.

A des fins de simplification, sur les figures 1, 7A, 8A et 10 les masses sont représentées schématiquement et les deux parties mobiles de chaque masse ne sont pas détaillées.

Par exemple, le gyromètre de la figure 4 est fixé au sommet 10a du losange par une de ses masses 12, 14.

Dans la suite de la description, les gyromètres seront désignés par Gy et les accéléromètres par Acc.

Sur la figure 2B, on peut voir les détails d'un exemple de liaison entre les moyens de couplage 6 et l'une des masses du capteur. Cette liaison se fait à travers des moyens élastique 42 entre un bord de la masse et une poutre sur laquelle est fixé le sommet 10a. Avantageusement, un ancrage A5 est réalisé au niveau de la poutre pour améliorer le guidage longitudinal.

Sur la figure 3, on peut voir en détail le couplage fort 30' en antiphase entre deux masses des gyromètres de la structure de la figure 1. Le couplage a la forme d'un losange relié par deux sommets opposés 30.1', 30.3' aux deux masses et ses deux autre sommets 30.2', 30.4' sont reliés à des poutres perpendiculaires à la droite reliant les deux sommets 30.2' et 30.4', au niveau de la zone centrale des poutres. Les poutres sont ancrées sur le substrat à leur extrémité.

Les moyens de couplage entre les capteurs sont avantageusement des moyens de couplage fort, assurant d'avoir une même amplitude au niveau des capteurs, même dans le cas où la centrale comporte des gyromètres et des accéléromètres.

Selon l'invention, les deux parties de mesure différentielle de chaque capteur sont situées côté à côté du même côté des moyens de couplage intercapteurs, ce qui permet de coupler les deux parties en détection et en particulier d'utiliser des moyens de couplage forts, tels qu'une barre rigide en rotation autour d'un pivot, ce qui rend le capteur très peu sensible aux signaux parasites.

A titre d'exemple, si on considère le gyroscope de la figure 4, une accélération selon l'axe Y crée une force sur chaque masse de détection, mais ces deux forces s'équilibrent sur la barre rigide de couplage 38. Le signal d'accélération ne sera ainsi pas mesuré par les moyens de détection. De la même manière sur l'accéléromètre de la figure 5, la barre de couplage rigide permet d'équilibrer les forces de Coriolis qui s'exercent sur chacune des masses.

La mise en œuvre de couplages intracapteurs forts permet que les amplitudes des deux masses de chaque capteur soient égales, les couples exercés par exemple sur la barre rigide 38 de couplage fort sont alors égaux, ce qui rend les capteurs les plus robustes possibles aux signaux parasites.

Sur la figure 6, on peut voir une simulation du déplacement en excitation des masses de la centrale inertielle de la figure 1 dans un mode de résonance en excitation, comportant quatre gyromètres.

Les éléments rectangulaires représentent les masses. Le niveau de gris des masses illustre leur amplitude de déplacement, plus le niveau de gris est élevé plus l'amplitude est importante. Dans le cas de la structure de la centrale de la figure 1, on constate que toutes les masses ont sensiblement la même amplitude, (les niveaux de gris étant proches) en particulier les deux masses de chaque gyromètre ont la même amplitude. C'est ce qui est recherché dans le cadre de la présente invention. Ceci est obtenu grâce au couplage fort entre les masses. En outre on remarque que le couplage fort au sein d'un même capteur est effectivement en antiphase.

Dans le cas de la centrale de la figure 1 qui comporte quatre axes de détection, et dans le cas où les capteurs sont tous des accéléromètres, l'un des capteurs est redondant. Cependant il assure d'avoir une structure équilibrée.

En variante, on pourrait envisager de remplacer un capteur par un objet ayant pour fonction d'équilibrer la structure. Cet objet présenterait la même masse, les ressorts auraient la même raideur. Cependant il ne comporterait pas de partie détection, i.e. les parties d'excitation et de détection seraient confondues et la structure ne comporterait pas de barre 38, ni de moyens de détection tel que des électrodes, des jauges...

En variante, la centrale peut comporter trois gyromètres et un accéléromètre, deux gyromètres et deux accéléromètres, ou un gyromètre et trois accéléromètres.

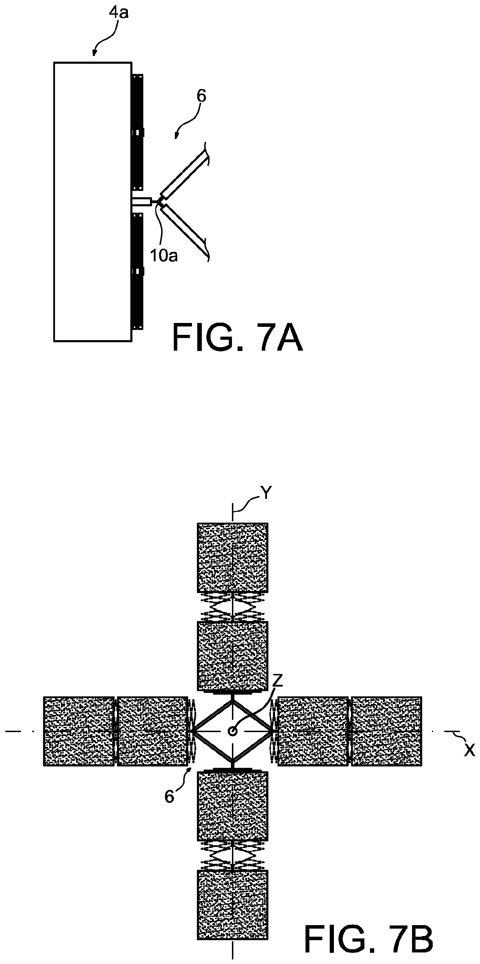

Sur la figure 7A, on peut voir un détail d'exemple de couplage fort entre les capteurs, dans ce cas, le sommet 10a est connecté rigidement directement à la masse, et non par l'intermédiaire de moyens élastiques.

Sur la figure 7B, on peut voir une simulation du déplacement en excitation des masses d'une centrale inertielle comportant des couplages forts entre les capteurs tels que représenté sur la figure 7A, dans un mode résonance en excitation, comportant quatre gyromètres couplés entre eux par un couplage fort. Entre outre, les couplages entre les masses d'un même gyromètre sont forts et en antiphase. On constate que les masses ont effectivement toutes la même amplitude de déplacement.

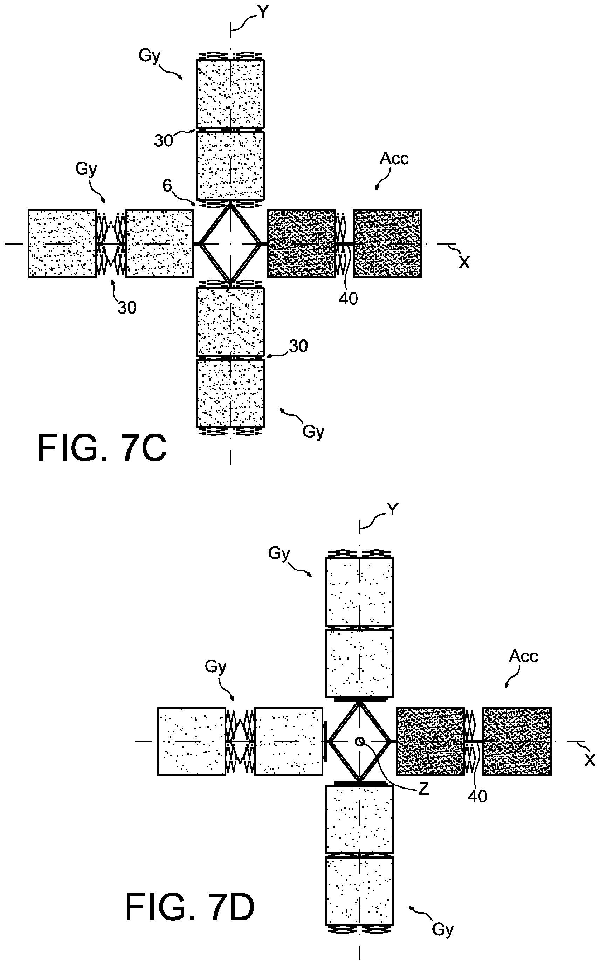

Sur la figure 7C, on peut voir une simulation du déplacement en excitation des masses de la centrale inertielle de la figure 7A dans un mode résonance en excitation, comportant trois gyromètres et un accéléromètre. Les deux masses de chaque gyromètre sont couplés par un couplage fort en antiphase et les deux masses de l'accéléromètre sont couplées par un couplage fort en phase, qui est formé dans l'exemple représenté par une barre rigide. Les capteurs, entre eux, sont couplés par un couplage fort. A nouveau, toutes les masses ont sensiblement la même amplitude de déplacement.

Sur la figure 7D, on peut voir une simulation du déplacement en excitation des masses d'une variante de la centrale inertielle de la figure 7A dans un mode résonance en excitation, comportant trois gyromètres et un accéléromètre. Les deux masses de chaque gyromètre sont couplées par un couplage fort en antiphase et les deux masses de l'accéléromètre sont couplées par un couplage fort en phase, qui est formé dans l'exemple représenté par une barre rigide. En revanche, contrairement au cas de la figure 7C, les capteurs entre eux sont couplés par un couplage faible du type de celui représenté sur la figure 2B.

On constate que les masses des trois gyromètres ont sensiblement la même amplitude de déplacement, et que les deux masses de l'accéléromètre ont la même amplitude de déplacement qui est différente de celle des masses des gyromètres. Ce cas de figure est intéressant puisque les masses dans chaque capteur ont toujours la même amplitude de déplacement.

Les inventeurs ont constaté qu'une structure inertielle dans laquelle les masses de chaque capteur étaient couplées entre elles par un couplage faible ne permettait pas de fonctionner avec une électronique simplifiée car les masses de chaque capteur ne se déplaçaient pas avec la même amplitude.

Nous allons maintenant expliquer le fonctionnement d'une telle centrale.

Les moyens d'excitation des capteurs sont activés, par exemple ceux des capteurs 4a et 4c sont activés, ce qui provoque une mise en vibration des premières parties mobiles des capteurs 4a, 4c directement excitées et des deuxièmes parties mobiles des capteurs 4a, 4c. Dans le cas de gyromètres, les deux masses de capteurs 4a, 4c vibrent en antiphase, dans le cas d'accéléromètres elles vibrent en phase. En outre, du fait des moyens de couplage 6 entre les deux capteurs 4a, 4c alignés sur l'axe X et les deux capteurs 4b, 4d alignés sur l'axe Y, leurs masses directement liées aux moyens de couplage sont mises en vibration, ainsi que les masses couplées par les moyens de couplage fort. Les masses des capteurs 4b, 4d vibrent alors en antiphase dans le cas de gyromètre et en phase dans le cas d'accéléromètres.

De manière pratique, les moyens d'excitation sont disposés de manière symétrique sur la structure et plus particulièrement au niveau des masses, cependant il est possible de n'exciter qu'une masse, i.e. qu'une partie d'excitation 16, ce qui est suffisant pour faire bouger tout l'ensemble de la manière souhaitée

Par conséquent, une seule boucle d'asservissement est mise en œuvre pour exciter l'ensemble des masses mobiles des capteurs.

Les masses mobiles sont excitées par les moyens d'excitation agissant sur les premières parties.

Du fait des accélérations et des rotations ou forces de Coriolis, les deuxièmes parties des masses mobiles sont mise en mouvement; dans le cas des capteurs représentés, les parties mobiles pivotent autour des pivots 26. Ce déplacement est détecté par les moyens de détection, par exemple des jauges piézorésistives. Comme chaque capteur présente une bonne robustesse, du fait de leur structure à deux masses inertielles, la détection des rotations discriminent relativement bien les accélérations et inversement, le traitement des signaux détectés et l'électronique de détection sont simplifiés. Dans le cas de trois ou quatre gyromètres, les forces de Coriolis dans les trois directions de l'espace sont déterminées, et de même pour l'accélération dans le cas de trois ou quatre accéléromètres.

Dans le cas où la centrale comporte deux gyromètres et deux accéléromètres, de préférence les deux gyromètres sont alignés et les deux accéléromètres sont alignés afin d'améliorer l'équilibrage de la structure.

Dans le cas où les moyens de couplage entre les capteurs sont des moyens de couplage fort, et quelle que soit le type de capteurs, ils présentent tous la même amplitude comme cela est représenté sur la figure 7C.

Dans le cas d'un couplage faible, les capteurs du même type ont la même amplitude. Par exemple dans le cas où la centrale comporte trois gyromètres et un accéléromètre, l'accéléromètre ne présente la même amplitude de déplacement.

Cependant, grâce au couplage fort entre les masses de chaque capteur, les masses d'un même capteur présentent la même amplitude de déplacement, comme cela est représenté sur la figure 7D. Des moyens de corrections au niveau du traitement des signaux détectés permettent de déterminer l'accélération.

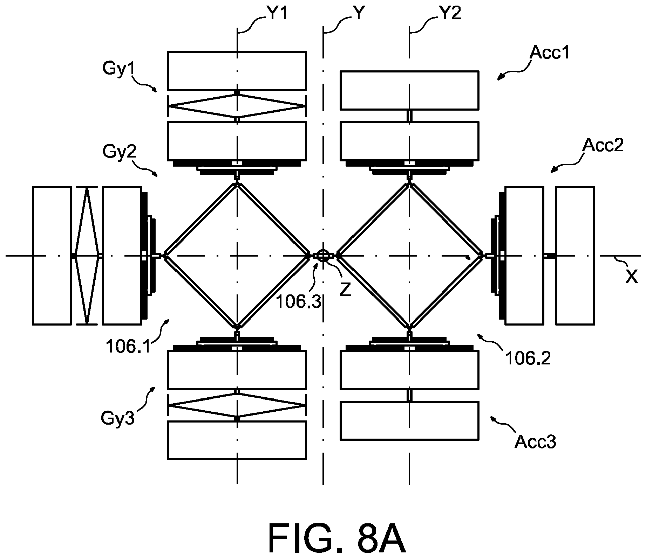

Sur la figure 8A, on peut voir un exemple de réalisation d'une centrale inertielle selon la présente invention à 6 axes de détection.

La centrale comporte six capteurs, trois gyromètres Gy1, Gy2, Gy3 et trois accéléromètres Acc1, Acc2, Acc3.

Deux gyromètres Gy1 et Gy3 sont alignés sur un axe Y1, deux accéléromètres Acc1 et Acc3 sont alignés sur un axe Y2 parallèle à l'axe Y1, et un gyromètre Gy2 et un accéléromètre Acc2 sont alignés sur un axe X.

Des moyens de couplage 106.1 relient les trois gyromètres et des moyens de couplage 106.2 relient les trois accéléromètres, et des moyens de couplage 106.3 relient les trois gyromètres et les trois accéléromètres.

Dans l'exemple représenté, les moyens de couplage 106.1 et 106.2 sont des moyens de couplage fort ayant la même structure, i.e. en losange. Les moyens de couplage 106.3 sont également des moyens de couplage fort et sont formés par une liaison rigide type poutre ou barre.

D'autres structures de couplage fort peuvent être prévues entre les trois gyromètres et les trois accéléromètres. Par exemple, on pourrait prévoir une structure de poutres agencées en losange reliant les deux sommets en regard des losanges de moyens de couplage 106.1, 106.2 ou en ellipse.

Dans un autre exemple de réalisation, les moyens de couplage 106.1, 106.2 et 106.3 peuvent être également de moyens de couplage faible. Ou alternativement certains moyens de couplage peuvent être de couplage fort et d'autres de couplage faible.

La structure de la figure 8A est particulièrement intéressante dans le cas d'une réalisation dans un matériau non-isotrope mais ayant une symétrie orthogonale comme le silicium monocristallin, la structure de la figure 8A permet alors d'avoir des propriétés du matériau identiques sur les différents capteurs, qui ont différentes orientations, dans l'exemple représenté des orientations à 90° l'une de l'autre.

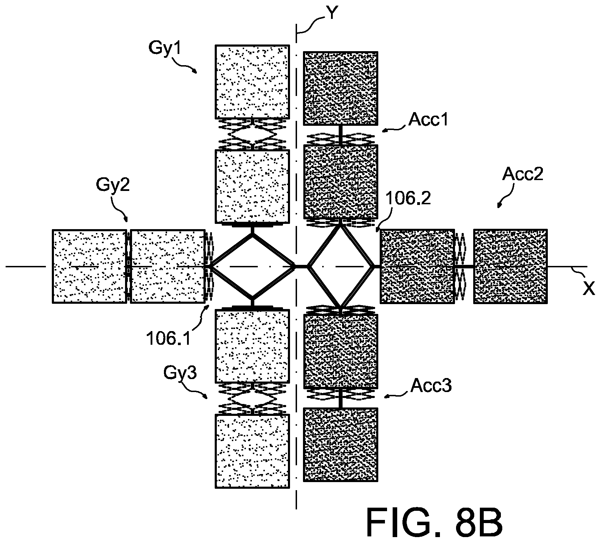

Sur la figure 8B, on peut voir une simulation du déplacement en excitation des masses de la centrale inertielle de la figure 8A dans un mode résonance en excitation, on constate que les masses des accéléromètres ont toutes la même amplitude et celles des gyromètres sont également toutes la même amplitude.

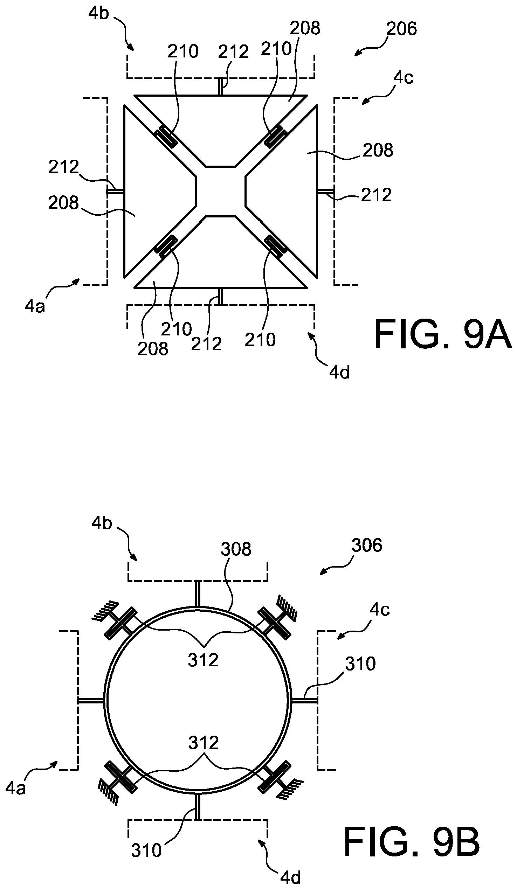

Sur la figure 9A et 9B sont représentées des variantes de réalisation de moyens de couplage entre les capteurs de la centrale. Dans les deux variantes, il s'agit de moyens de couplage faible.

Sur la figure 9A, les moyens de couplage 206 comportent quatre éléments en forme de trapèze 208 disposés de sorte à reconstituer sensiblement une forme carrée, les grandes bases formant les côtés du carré.

Les quatre trapèzes sont reliées les uns aux autres par leurs côtés non parallèle au moyen d'éléments élastiques 210.

Chaque élément trapézoïdal est, quant à lui, relié aux capteurs 4a à 4d par une liaison rigide 212 longitudinalement, type poutre.

Sur la figure 9B, le moyens de couplage 306 sont formés par une structure en forme de cercle 308 reliée à chacun des capteurs par une liaison rigide 310 longitudinalement, type poutre. En outre, le cercle 308 est ancré sur le substrat par quatre moyens élastiques 312 alignés deux à deux, chaque ancrage étant disposé entre deux liaisons rigides avec les capteurs.

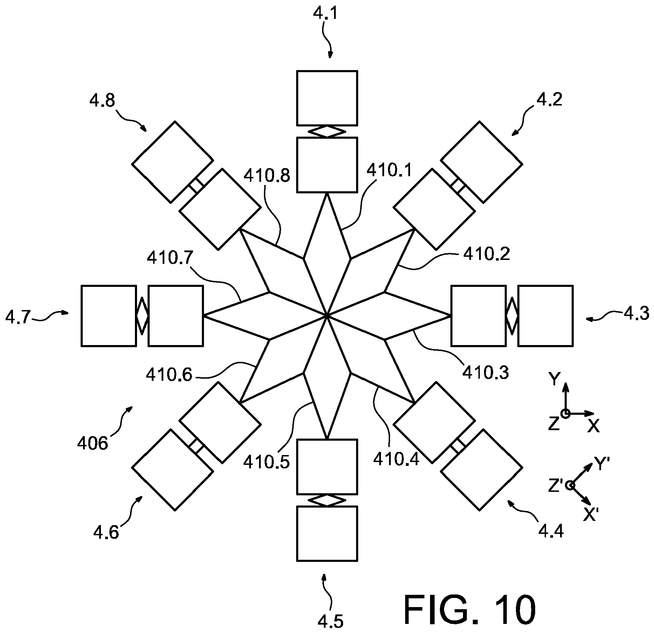

Sur la figure 10, on peut voir un autre exemple de centrale présentant huit axes de détection.

Dans cet exemple de réalisation, les moyens de couplage 40 entre capteurs présentent une structure formée de poutres agencées de sorte à forme huit losanges 410.1 à 410.8 identiques ayant un sommet commun formant le centre de symétrie de la structure, et chaque losange 410.1 à 410.8 ayant un côté commun avec le losange adjacent. La structure de couplage a alors la forme d'une étoile à huit branches.

Les capteurs 4.1 à 4.8 sont alors solidaires de la structure au niveau des sommets des branches de l'étoile.

A titre exemple, les capteurs peuvent être répartis comme suit :
- le capteur 4.1 est un gyromètre X,
- le capteur 4.2 est un accéléromètre Z',
- le capteur 4.3 est un gyromètre Z,
- le capteur 4.4 est un accéléromètre Z',
- le capteur 4.5 est un gyromètre Z,
- le capteur 4.6 est un accéléromètre X',
- le capteur 4.7 est un gyromètre Y,
- le capteur 4.8 est un accéléromètre Y'.

On constate que, dans ce cas, les axes X, Y du gyromètre et X', Z' de l'accéléromètre sont décalés d'un angle de 45°.

Les capteurs décrits sur les figures 4 et 5 sont des gyromètres Z et des accéléromètres X ou Y, l'axe du pivot étant orienté selon l'axe Z. Pour réaliser des gyromètres X ou Y et des accéléromètres Z', les structures des capteurs sont telles que les axes des pivots des masses mobile sont contenus dans le plan XY, les masses mobiles se déplaçant hors du plan de la centrale inertielle. La structure de ces capteurs n'est pas décrite en détail mais celle-ci est bien connue de l'homme du métier.

La structure en étoile à huit branches est équilibrée. En variante, le gyromètre Z et l'accéléromètre Z' redondants pourraient être remplacées par des objets assurant uniquement l'équilibrage de la structure.

La présente invention offre une centrale inertielle capable de détecter jusqu'à 6 axes et offrant un haut niveau d'intégration. Elle permet un gain de surface important par rapport à une centrale composée de capteurs simplement assemblés et sans couplage entre eux. En outre, elle offre une forte précision d'alignement par rapport à des capteurs assemblés.

De plus, du fait du couplage des capteurs et de leur structure et mode de fonctionnement proche, il est possible de gérer tous les capteurs par une seule électronique, avec une seule boucle d'excitation et une même électronique de lecture, ceci à la fois pour les accéléromètres et les gyromètres.

En ce qui concerne la lecture de détection, il est possible de réaliser une lecture des différents axes par multiplexage temporel, i.e. en effectuant une lecture des moyens de détection des différents capteurs les uns après les autres à une fréquence sensiblement plus importante que la fréquence du mouvement d'excitation.

En outre, les sensibilités entre axes (ou « cross axis » en anglais) sont réduites et elles peuvent être aisément optimisées grâce à l'utilisation de structures séparées dédiées à la détection de chaque axe, ces structures présentant chacune deux masses mobiles.

De préférence, la structure de la centrale est équilibrée en disposant un nombre pair de structures de capteurs de telle sorte que les structures se faisant face aient le même couplage (soit en phase soit en opposition de phase) et la même masse actionnée en excitation, par exemple un accéléromètre est aligné avec un accéléromètre et un gyromètre est aligné avec un gyromètre comme dans le cas de la centrale inertielle de la figure 10.

Nous allons maintenant décrire un exemple de procédé de réalisation d'une centrale inertielle selon la présente invention, à excitation électrostatique et à détection capacitive.

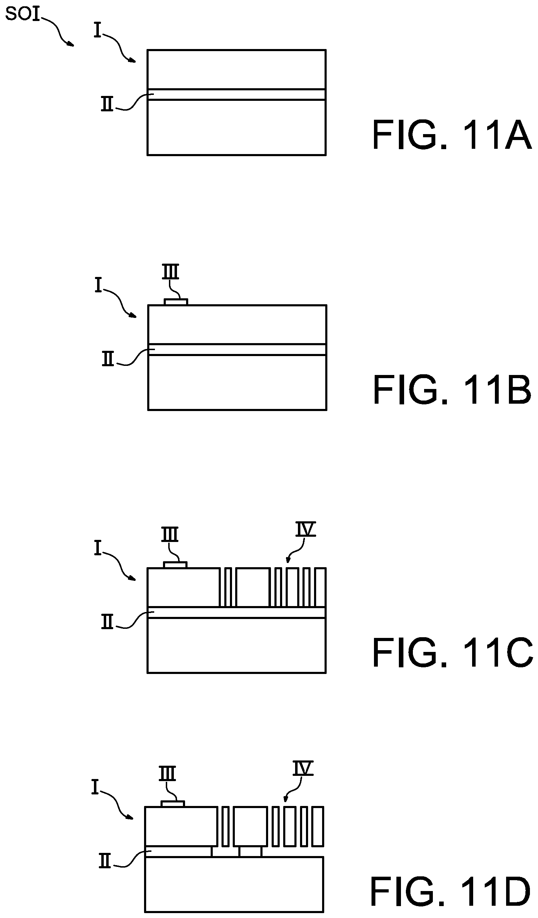

Sur les figures 11A à 11D, sont représentées schématiquement des étapes du procédé de réalisation.

Par exemple, on utilise un substrat SOI, représenté sur la figure 11A, dont la couche de silicium supérieure I a une épaisseur comprise entre 5 µm et 100 µm et dont la couche d'oxyde enterré II est comprise entre 0,5 µm et 5 µm.

Lors d'une première étape représentée sur la figure 11B, on effectue un dépôt métallique sur le couche de silicium supérieure I, par exemple de l'AlSi, de l'or...d'une épaisseur typique comprise entre 100 nm et 2pm. On effectue ensuite un lithographie sur cette couche afin de délimiter les plots de contact III de contact II et les pistes et, on effectue une gravure de la couche de métal. La résine sur la couche métallique restante est éliminée.

Lors d'une étape suivante représentée sur la figure 11C, on définit la partie mécanique IV, i.e. les masses mobiles et les moyens de couplage mécanique, par lithographie de la couche de silicium supérieure I.

On réalise ensuite une gravure profonde de la couche I avec arrêt sur l'oxyde enterré II.

La résine restant sur la couche de silicium I est éliminée.

On effectue ensuite une libération des masses mobiles et des moyens de couplage IV par élimination de l'oxyde de la couche II situé sous le silicium gravé, par exemple avec de l'acide fluorhydrique vapeur. La structure libérée est schématisée sur la figure 11D.

Ce procédé est donné uniquement à titre d'exemple, et n'est en aucun cas limitatif.

## Revendications

1. Centrale inertielle pour la mesure au moins d'accélérations comportant au moins quatre capteurs inertiels (4a, 4b, 4c, 4d) dont au moins un est un accéléromètre, répartis par paire sur au moins deux axes sécants (X, Y), chaque capteur (4a, 4b, 4c, 4d) comportant deux masses inertielles (12, 14, 12', 14'), chaque masse inertielle (12, 14, 12', 14') comportant une partie mobile d'excitation (16, 16') et une partie mobile de détection (18, 18'), les parties mobiles d'excitation (16, 16') d'un capteur (4a, 4b, 4c, 4d) étant distinctes de celles des autres capteurs, ladite centrale comportant également des moyens d'excitation des parties d'excitation (16, 16') des capteurs et des moyens de détection du mouvement des parties de détection (18, 18'), et une unité de contrôle des moyens d'excitation et de moyens de détection, les deux masses inertielles (12, 14, 12', 14') de chaque capteur (4a, 4b, 4c, 4d) étant couplées mécaniquement par des moyens de couplage (30, 40), dits moyens de couplage intracapteurs, lesdits moyens de couplage intracapteurs (30, 40) étant des moyens de couplage fort, ladite centrale comportant également des moyens de couplage mécanique (6) entre les quatre capteurs (4a, 4b, 4c, 4d), dits moyens de couplage intercapteurs, de sorte à lier en mouvement les masses de tous les capteurs, lesdits moyens de couplage intercapteurs (6) étant déformables élastiquement et aptes à transmettre les vibrations d'excitation d'un axe (X, Y) à l'autre (Y, X).

2. Centrale inertielle selon la revendication 1, dans laquelle lesdits moyens de couplage intercapteurs (30, 40) sont situés à l'intersection des axes (X, Y) portant les deux paires de capteurs (4a, 4b, 4c, 4d), les deux capteurs de chaque paire étant disposés de part et d'autre desdits moyens de couplage intercapteurs (6).

3. Centrale inertielle selon la revendication 1 ou 2, dans laquelle les deux axes (X, Y) sont perpendiculaires.

4. Centrale inertielle selon l'une des revendications 1 à 3, dans laquelle les moyens de couplage intercapteurs (6) sont des moyens de couplage fort.

5. Centrale inertielle selon l'une des revendications 1 à 4, dans laquelle les moyens de couplage intercapteurs sont reliées à la partie d'excitation (16, 16') de l'une des masses (12, 14, 12', 14') de chaque capteur.

6. Centrale inertielle selon l'une des revendications 1 à 5, dans laquelle les moyens de couplage intercapteurs (6) comportent un assemblage de poutres comportant au moins un motif fermé, par exemple ayant la forme d'un losange, chaque sommet dudit losange étant relié à une masse (12, 14, 12', 14') d'un capteur (4a, 4b, 4c, 4d).

7. Centrale inertielle selon l'une des revendications 1 à 6, dans laquelle les moyens de couplage intracapteurs (30, 40) relient les deux parties d'excitation (16, 16') de chaque capteur (4a, 4b, 4c, 4d).

8. Centrale inertielle selon l'une des revendications 1 à 7, dans laquelle la partie d'excitation (16, 16') de chaque capteur est excitable dans une seule direction.

9. Centrale inertielle selon l'une des revendications 1 à 8, comportant un ou plusieurs gyromètres (Gy) et/ou un ou plusieurs accéléromètres (Acc), ledit au moins gyromètre et/ou accéléromètre (Acc) étant apte à mesurer une rotation et/ou une accélération selon un axe dit de détection

10. Centrale inertielle selon la revendication 9, comportant une barre rigide en rotation autour d'un axe orthogonal à l'axe de détection, ladite barre rigide reliant les deux parties de détection (18') des masses (1', 14') de l'accéléromètre (Acc).

11. Centrale inertielle selon les revendications 9 ou 10, les moyens de couplage intracapteurs (30) entre deux masses (12, 14) d'un gyromètre (Gy) réalisant un couplage fort en antiphase, et les moyens de couplage intracapteurs (40) entre deux masses (12', 14') d'un accéléromètre (Acc) réalisant un couplage fort en phase.

12. Centrale inertielle selon la revendication 11, dans laquelle les moyens de couplage intracapteurs en antiphase (30) comportent un assemblage fermé de poutres.

13. Centrale inertielle selon la revendication 11 ou 12, dans laquelle les moyens de couplage intracapteurs en phase (40) comportent une liaison rigide, les deux masses (12', 14') d'un même accéléromètre agissant comme une masse unique.

14. Centrale inertielle selon l'une des revendications 9 à 13, dans laquelle le ou les gyromètres (Gy) comporte(nt) une barre rigide en rotation autour de l'axe de détection autour duquel la rotation est à détecter reliant les parties de détection (18) des masses inertielles.

15. Centrale inertielle selon l'une des revendications 1 à 14, dans laquelle au moins l'un des capteurs (4a, 4b, 4c, 4d) est remplacé par un objet ne fournissant pas de mesure sur l'accélération ou la rotation et assurant un équilibrage de la centrale inertielle.

16. Centrale inertielle selon l'une des revendications 1 à 15, comportant trois paires de capteurs, les capteurs de chaque paire étant alignés sur un axe (X, Y1, Y2), deux (Y1, Y2) des axes étant parallèles et l'autre axe (X) étant sécant aux deux axes parallèles, des premiers moyens de couplage intercapteurs (106.1, 106.2) étant prévus au niveau de chaque intersection d'un des axes parallèles avec l'autre axe et des deuxième moyens de couplage intercapteurs(106.3) étant prévus entre les premiers moyens de couplage intercapteurs (106.1, 106.2).

17. Centrale inertielle selon la revendication 16, comportant trois gyromètres et trois accéléromètres, les trois gyromètres étant reliés directement à des premiers moyens de couplage intercapteurs différents (106.1) des premiers moyens de couplage intercapteurs (106.2) auxquelles sont reliés directement les trois accéléromètres.

18. Centrale inertielle selon l'une des revendications 1 à 17, comportant huit capteurs, les moyens de couplage intercapteurs comportant un assemblage de huit motifs (410.1, 410.2, 410.3, 410.4, 410.5, 410.6, 410.7, 410.8, 410.9, 410.10) en forme de losange juxtaposés, les motifs étant reliés par l'un de leurs sommets en un point constituant un centre de symétrie de la structure de couplage, de façon à présenter des motifs opposés et alignés deux à deux, les sommets des motifs opposés au centre de symétrie étant destinés à être solidaire chacun d'une masse des huit capteurs.

19. Centrale inertielle selon l'une des revendications 1 à 18, dans laquelle les moyens d'excitation sont de type électrostatique, piézoélectrique ou magnétique et les moyens de détection sont de type capacitif, piézoélectrique, magnétique ou piézorésistif, les moyens de détections étant avantageusement choisis de même type pour tous les capteurs.

20. Centrale inertielle selon l'une des revendications 1 à 19, dans laquelle l'unité de contrôle comporte une unique boucle d'asservissement en excitation pour tous les capteurs et des moyens de détection du déplacement des parties de détection.

21. Centrale inertielle selon l'une des revendications 1 à 20, dans laquelle l'unité de contrôle comporte des moyens de lecture des moyens de détection des différents capteurs par multiplexage temporel.

## Patentansprüche

1. Trägheitseinheit zur Messung zumindest von Beschleunigungen, enthaltend zumindest vier Trägheitssensoren (4a, 4b, 4c, 4d), von denen zumindest einer ein Beschleunigungsmesser ist und die paarweise auf zumindest zwei sich schneidenden Achsen (X, Y) verteilt sind, wobei jeder Sensor (4a, 4b, 4c, 4d) zwei Trägheitsmassen (12, 14, 12', 14') umfasst, wobei jede Trägheitsmasse (12, 14, 12', 14') einen beweglichen Anregungsteil (16, 16') und einen beweglichen Erfassungsteil (18, 18') umfasst, wobei die beweglichen Anregungsteile (16, 16') eines Sensors (4a, 4b, 4c, 4d) sich von denen der anderen Sensoren unterscheiden, wobei die Einheit außerdem Mittel zur Anregung der Anregungsteile (16, 16') der Sensoren und Mittel zur Erfassung der Bewegung der Erfassungsteile (18, 18') umfasst, sowie eine Steuereinheit für die Anregungsmittel und die Erfassungsmittel, wobei die beiden Trägheitsmassen (12, 14, 12', 14') jedes Sensors (4a, 4b, 4c, 4d) mechanisch durch Kopplungsmittel (30, 40), Intra-Sensor-Kopplungsmittel genannt, gekoppelt sind, wobei die Intra-Sensor-Kopplungsmittel (30, 40) starke Kopplungsmittel sind, wobei die Einheit auch mechanische Kopplungsmittel (6) zwischen den vier Sensoren (4a, 4b, 4c, 4d), Inter-Sensor-Kopplungsmittel genannt, umfasst, um die Massen aller Sensoren in Bewegung zu verbinden, wobei die Inter-Sensor-Kopplungsmittel (6) elastisch verformbar sind und die Anregungsschwingungen von einer Achse (X, Y) auf die andere (Y, X) übertragen können.

2. Trägheitseinheit nach Anspruch 1,
wobei die Inter-Sensor-Kopplungsmittel (30, 40) sich am Schnittpunkt der Achsen (X, Y) befinden, die die beiden Paare von Sensoren (4a, 4b, 4c, 4d) tragen, wobei die beiden Sensoren jedes Paares auf beiden Seiten der Inter-Sensor-Kopplungsmittel (6) angeordnet sind.

3. Trägheitseinheit nach Anspruch 1 oder 2,
wobei die beiden Achsen (X, Y) senkrecht zueinander verlaufen.

4. Trägheitseinheit nach einem der Ansprüche 1 bis 3,
wobei die Inter-Sensor-Kopplungsmittel (6) starke Kopplungsmittel sind.

5. Trägheitseinheit nach einem der Ansprüche 1 bis 4,
wobei die Inter-Sensor-Kopplungsmittel mit dem Anregungsteil (16, 16') einer der Massen (12, 14, 12', 14') jedes Sensors verbunden sind.

6. Trägheitseinheit nach einem der Ansprüche 1 bis 5,
wobei die Inter-Sensor-Kopplungsmittel (6) eine Anordnung von Balken mit zumindest einem geschlossenen Muster, beispielsweise in Form einer Raute, enthalten, wobei jeder Scheitelpunkt der Raute mit einer Masse (12, 14, 12', 14') eines Sensors (4a, 4b, 4c, 4d) verbunden ist.

7. Trägheitseinheit nach einem der Ansprüche 1 bis 6,
wobei die Intra-Sensor-Kopplungsmittel (30, 40) die beiden Anregungsteile (16, 16') jedes Sensors (4a, 4b, 4c, 4d) verbinden.

8. Trägheitseinheit nach einem der Ansprüche 1 bis 7,
wobei der Anregungsteil (16, 16') jedes Sensors nur in einer Richtung anregbar ist.

9. Trägheitseinheit nach einem der Ansprüche 1 bis 8,
enthaltend ein oder mehrere Gyrometer (Gy) und/oder einen oder mehrere Beschleunigungsmesser (Acc), wobei das zumindest eine Gyrometer und/oder der zumindest eine Beschleunigungsmesser (Acc) dazu geeignet ist, eine Drehung und/oder eine Beschleunigung entlang einer sogenannten Erfassungssachse zu messen.

10. Trägheitseinheit nach Anspruch 9,
enthaltend einen starren Stab, der sich um eine zur Erfassungsachse orthogonal verlaufende Achse dreht, wobei der starre Stab die beiden Erfassungsteile (18') der Massen (1', 14') des Beschleunigungsmessers (Acc) verbindet.

11. Trägheitseinheit nach den Ansprüchen 9 oder 10,
wobei die Intra-Sensor-Kopplungsmittel (30) zwischen zwei Massen (12, 14) eines Gyrometers (Gy) eine starke gegenphasige Kopplung bewirken und die Intra-Sensor-Kopplungsmittel (40) zwischen zwei Massen (12', 14') eines Beschleunigungsmessers (Acc) eine starke phasengleiche Kopplung bewirken.

12. Trägheitseinheit nach Anspruch 11,
wobei die Intra-Sensor-Kopplungsmittel (30) zur gegenphasigen Kopplung eine geschlossene Anordnung von Balken enthalten.

13. Trägheitseinheit nach Anspruch 11 oder 12,
wobei die Intra-Sensor-Kopplungsmittel (40) zur phasengleichen Kopplung eine starre Verbindung enthalten, wobei die beiden Massen (12', 14') desselben Beschleunigungsmessers als eine einzige Masse wirken.

14. Trägheitseinheit nach einem der Ansprüche 9 bis 13,
wobei das bzw. die Gyrometer (Gy) einen starren Stab enthält/enthalten, der sich um die Erfassungsachse dreht, um die herum die Rotation erfasst werden soll, und der die beiden Erfassungsteile (18) der Trägheitsmassen verbindet.

15. Trägheitseinheit nach einem der Ansprüche 1 bis 14,
wobei zumindest einer der Sensoren (4a, 4b, 4c, 4d) durch ein Objekt ersetzt ist, das keine Beschleunigungs- oder Rotationsmessung liefert und ein Ausgleichen der Trägheitseinheit sicherstellt.

16. Trägheitseinheit nach einem der Ansprüche 1 bis 15,
enthaltend drei Sensorpaare, wobei die Sensoren eines jeden Paares auf einer Achse (X, Y1, Y2) ausgerichtet sind, wobei zwei (Y1, Y2) der Achsen parallel verlaufen und die andere Achse (X) die beiden parallelen Achsen schneidet, wobei erste Inter-Sensor-Kopplungsmittel (106.1, 106.2) im Bereich eines jeden Schnittpunkts einer der parallelen Achsen mit der anderen Achse vorgesehen sind und zweite Inter-Sensor-Kopplungsmittel (106.3) zwischen den ersten Inter-Sensor-Kopplungsmittel (106.1, 106.2) vorgesehen sind.

17. Trägheitseinheit nach Anspruch 16,
enthaltend drei Gyrometer und drei Beschleunigungsmesser, wobei die drei Gyrometer direkt mit ersten Inter-Sensor-Kopplungsmitteln (106.1) verbunden sind, die sich von den ersten Inter-Sensor-Kopplungsmitteln (106.2) unterscheiden, mit denen die drei Beschleunigungsmesser direkt verbunden sind.

18. Trägheitseinheit nach einem der Ansprüche 1 bis 17,
enthaltend acht Sensoren, wobei die Inter-Sensor-Kopplungsmittel eine Anordnung von acht nebeneinandergeordneten, rautenförmigen Mustern (410.1, 410.2, 410.3, 410.4, 410.5, 410.6, 410.7, 410.8, 410.9, 410.10) aufweisen, wobei die Muster mit einem ihrer Scheitelpunkte an einem Punkt verbunden sind, der ein Symmetriezentrum der Kopplungsstruktur bildet, so dass paarweise gegenüberliegend ausgerichtete Muster entstehen, wobei die dem Symmetriezentrum gegenüberliegenden Scheitelpunkte der Muster dazu bestimmt sind, jeweils mit einer Masse der acht Sensoren fest verbunden zu werden.

19. Trägheitseinheit nach einem der Ansprüche 1 bis 18,
wobei die Anregungsmittel vom elektrostatischen, piezoelektrischen oder magnetischen Typ sind und die Erfassungsmittel vom kapazitiven, piezoelektrischen, magnetischen oder piezoresistiven Typ sind, wobei vorteilhaft für alle Sensoren Erfassungsmittel vom gleichen Typ gewählt sind.

20. Trägheitseinheit nach einem der Ansprüche 1 bis 19,
wobei die Steuereinheit einen einzigen Anregungsregelkreis für alle Sensoren und Erfassungsmittel zum Erfassen der Verlagerung der Erfassungsteile enthält.

21. Trägheitseinheit nach einem der Ansprüche 1 bis 20,
wobei die Steuereinheit Mittel zum Auslesen der Erfassungsmittel der verschiedenen Sensoren durch Zeitmultiplexing enthält.

## Claims

1. Inertial unit for the measurement of accelerations comprising at least four inertial sensors (4a, 4b, 4c, 4d), at least one of which is an accelerometer, distributed by pairs on at least two intersecting axes (X, Y), each sensor (4a, 4b, 4c, 4d) comprising two inertial masses (12, 14, 12', 14'), each inertial mass (12, 14, 12', 14') comprising a moveable excitation part (16, 16') and a moveable detection part (18, 18'), the moveable excitation parts (16, 16') of a sensor (4a, 4b, 4c, 4d) being separate from those of the other sensors, said unit also comprising excitation means for exciting the excitation parts (16, 16') of the sensors and detection means for detecting the movement of the detection parts (18, 18'), and a control unit of the excitation means and detection means, the two inertial masses (12, 14, 12', 14') of each sensor (4a, 4b, 4c, 4d) being mechanically coupled by coupling means (30, 40), called intra-sensor coupling means (30, 40), said intra-sensor coupling means being strong coupling means, said unit also comprising mechanical coupling means (6) between the four sensors (4a, 4b, 4c, 4d), called inner-sensor coupling means, in such manner that the motions of the messes of all the sensors are bound to each other, said inner-sensor coupling means (6) being elastically deformable and able to transmit the excitation vibrations from one axis (X, Y) to the other (Y, X).

2. Inertial unit according to claim 1, in which said inner-sensor coupling means (30, 40) are situated at the intersection of the axes (X, Y) bearing the two pairs of sensors (4a, 4b, 4c, 4d), the two sensors of each pair being arranged on either side of said inner-sensor coupling structure (6).

3. Inertial unit according to claim 1 or 2, in which the two axes (X, Y) are perpendicular.

4. Inertial unit according to one of the claims 1 to 3 in which the inner-sensor coupling structure (6) is a strong coupling structure.

5. Inertial unit according to one of the claims 1 to 4, in which the inner-sensor coupling means are connected to the excitation part (16, 16') of one of the masses (12, 14, 12', 14')of each sensor.

6. Inertial unit according to one of the claims 1 to 5, in which the inner-sensor coupling means (6) comprise an assembly of beams comprising at least one closed pattern, for example having the shape of a diamond, each top of said diamond being connected to a mass (12, 14, 12', 14') of a sensor (4a, 4b, 4c, 4d).

7. Inertial unit according to one of the claims 1 to 6, in which the intra-sensor coupling means (30, 40) connect the two excitation parts (16, 16') of each sensor (4a, 4b, 4c, 4d).

8. Inertial unit according to one of the claims 1 to 7, in which the excitation part (16, 16') of each sensor is excitable in a single direction.

9. Inertial unit according to one of the claims 1 to 8, comprising one or more gyrometers (Gy) and/or one or more accelerometers (Acc), said at least gyrometer and/or accelerometer (Acc) being able to measure a rotation and/or an acceleration along an axis called detection axis.

10. Inertial unit according to claim 9, comprising a rigid rod in rotation around an axis orthogonal to the detection axis, said rigid rod connecting the two detection parts (18') of the masses (1', 14') of the accelerometer (Acc).

11. Inertial unit according to claims 9 or 10, the intra-sensor coupling means (30) between two masses (12, 14) of a gyrometer (Gy) forming a strong coupling in antiphase, and the intra-sensor coupling means (40) between two masses (12', 14') of an accelerometer (Acc) forming a strong coupling in phase.

12. Inertial unit according to claim 11, in which the intra-sensor coupling means in antiphase (30) comprise a closed assembly of beams.

13. Inertial unit according to claim 11 or 12, in which the intra-sensor coupling means in phase (40) comprise a rigid connection, the two masses (12', 14') of a same accelerometer acting as a single mass.

14. Inertial unit according to one of the claims 9 to 13, in which the gyrometers(s) (Gy) comprise a rigid rod in rotation around the detection axis around which the rotation is to be detected connecting the detection parts (18) of the inertial masses.

15. Inertial unit according to one of the claims 1 to 14, in which at least one of the sensors (4a, 4b, 4c, 4d) is replaced by an object not supplying a measurement on the acceleration or the rotation and ensuring a balancing of the inertial unit.

16. Inertial unit according to one of the claims 1 to 15, comprising three pairs of sensors, the sensors of each pair being aligned on an axis (XI, Y1, Y2), two (Y1, Y2) of the axes being parallel and the other axis (X) being intersecting to the two parallel axes, first inner-sensor coupling means (106.1, 106.2) being provided at the level of each intersection of one of the axes parallel with the other axis and second inner-sensor coupling means (106.3) being provided between the first inner-sensor coupling means (106.1, 106.2).

17. Inertial unit according to claim 16, comprising three gyrometers and three accelerometers, the three gyrometers being connected directly to the first inner-sensor coupling means (106.1) different from the first inner-sensor coupling means (106.2) to which are connected directly the three accelerometers.

18. Inertial unit according to one of the claims 1 to 17, comprising eight sensors, the inner-sensor coupling means comprising an assembly of eight patterns (410.1, 410.2, 410.3, 410.4, 410.5, 410.6, 410.7, 410.8), 410.9, 410.10) in juxtaposed diamond shape, the patterns being connected by one of their tops in a point constituting a centre of symmetry of the coupling structure, so as to have patterns opposite and aligned two by two, the tops of the opposite patterns at the centre of symmetry being intended to be each integral with a mass of eight sensors.

19. Inertial unit according to one of the claims 1 to 18, in which the excitation means are of electrostatic, piezoelectric or magnetic type and the detection means are of capacitive, piezoelectric, magnetic or piezoresistive type, the detection means being advantageously chosen of same type for all of the sensors.

20. Inertial unit according to one of the claims 1 to 19, in which the control unit comprises a single control loop in excitation for all of sensors and means for detecting the displacement of the detection parts.

21. Inertial unit according to one of the claims 1 to 20, in which the control unit comprises means for reading the detection means of the different sensors by time division multiplexing.
